# EUROPEAN PATENT SPECIFICATION

(11) **EP 2 177 192 B1**
(45) Date of publication and mention of the grant of the patent: **18.01.2012**
(21) Application number: 09173081.2
(22) Date of filing: 15.10.2009
(51) Int. Cl.: A61G 3/06, B60P 1/44

(54) **Cassette lift for vehicles**
Hebebühnenkassette für Fahrzeuge
Élévateur en cassette pour véhicules

(30) Priority: 15.10.2008 SE 0802200
(43) Date of publication of application: 21.04.2010
(73) Proprietor: U-Lift AB, 370 11 Backaryd (SE)
(72) Inventor: Urbanusson, Ingvar, 370 11, Backaryd (SE)
(74) Representative: Simonsson, Erik

(56) References cited:
- EP-A1- 1 162 165
- EP-A2- 1 249 363
- GB-A- 2 121 375

## Description

### Technical Field

The invention concerns a cassette lift for a vehicle, such as a bus, a tram or a train, that has a entrance, through which passengers can embark or alight the vehicle and which inside of a doorway of the vehicle has a stair leading up in several steps from an entrance landing to a vehicle floor, wherein the cassette lift comprises a horizontal platform, which in a resting position is inserted in one of the lower steps of the stair in order to be advanced from there for use with the aid of a slide and thereafter with the aid of a linkage system, which is articulately connected with both the slide and the platform, to be moved from a in height joint slide between a ground level on the outside of the vehicle and a level in level with the vehicle floor.

### Prior Art

A cassette lift according to the preamble is known from EP 1 162 165. Like other lifts of this kind it is intended to facilitate embarking or alighting for instance for persons in wheelchairs. In its resting position the lift is entirely retracted and hidden under the vehicle floor so that the stair in the entrance of the vehicle can be used unimpeded. On the other hand, in its position of use the advanced lift blocks said stair. It is therefore important in this context that the lift is easy to operate so that the blocking lasts as short as possible. Against that background extendable ramps for example of the type shown in EP 1 162 165 for bridging of a gap between the advanced lift platform and the vehicle floor are intrinsically unwanted.

In addition to the drawback with the extendable ramp, the cassette lift according to EP 1 162 165 has another disadvantage too. It consists of the meager range of lift permitted by its linkage system. Theoretically said range of lift is limited only by the length and pivoting range of a pair of parallel arms on each side of the platform and of course of the mounting height of the cassette lift in the vehicle too. In practice, however, the height of the doorway of the vehicle usually is adapted to the level of said entrance landing and not to the level of the vehicle floor. This means that the distance between an advanced platform and the top of the doorway easily becomes too small, in particular when the vehicle instead of a low floor, which can be reached by only a few steps, has a higher located floor, which requires a stair with more than for instance 3 steps. There are known solutions to this problem, but when it comes to cassette lifts they entail extensive conversion of the vehicle in question and therefore they are inappropriate (see for example US 5 110 252).

### Object of the Invention

Against this background, the object of the invention is to improve the known cassette lifts for vehicles in such a way that the problems with the known technology are obviated.

### Summary of the Invention

According to the invention this object is achieved by a lift according to the preamble in that the linkage system is divided into a first and a second parallel linkage system, which systems are articulately connected to each other, wherein the first parallel linkage system has arms which in order to enable substantially vertical movement of the platform are arranged to pivot within a first angular area including horizontal level, and wherein the second parallel linkage system has arms which for a mixed vertical and horizontal movement of the platform are arranged to pivot within a second angular area substantially from horizontal level and upwards, said second angular area facing away from the slide. The division of the linkage system in accordance with the invention makes it possible to move the lift platform in a coordinated way both vertically and horizontally when lifting and lowering and thereby to bridge said gap as well as to let the platform follow the inclination of the stair inside of the doorway such that no height conflict arises with the top of the doorway.

A divided linkage system for a lifting platform of a vehicle is disclosed in GB 2 121 375. According to that document the linkage system is fixedly supported on a vehicle by means of stationary fixing plates and always follows a strict motion pattern. From ground level, first a load-carrying deck is risen by means of first links and then the risen deck is further lifted by means of second links. A system like that is not able to adapt itself neither to the limited height of a doorway nor to the inclination of a stair inside of said doorway, and just like EP 1 162 165 it fails to identify the problem that the present invention is to solve. Thus, combining the prior art documents EP 1 162 165 and GB 2 121 375 only would lead the person skilled in the art to a solution suffering from to the same problems as mentioned before in connection with US 5 110 252.

Preferably, the slide is arranged to contribute by horizontal displacement to said horizontal movement of the platform achieved with the aid of said second parallel linkage system. Such a displacement is favorable, since it when lifting and lowering renders it possible to let the platform closely follow the inclination of the stair even at the bottom steps.

According to an embodiment of the invention said first parallel linkage system includes a pair of arms on either side of the platform, these pairs of arms having first ends, which are articulately connected to the slide such that said first angular area is facing away from the slide, and second ends, which are articulately connected to a pivot joint, wherein said second parallel, linkage system comprises a pair of arms on either side of the platform, these pairs of arms haven first ends, which are articulately connected to the pivot joint and second ends, which are articulately connected to the platform. In other words, this embodiment is designed almost as a cassette lift according to EP 1 162 165 with an additional elevateable platform on top of the existing one. However, it goes without saying that it in that case is not necessary to arrange an intermediate platform and that simple pivot joints, which define a necessary number of horizontal pivot axes, are fully sufficient.

Preferably, at this embodiment the pivot joints on either side of the platform are integrated in a horizontal frame, which is arranged beneath the platform. Such a frame ties together the link systems on both sides of the platform and contributes to stabilization of the lift. Moreover, the frame makes it possible to arrange a run up ramp in an easy way on the side of the frame facing away from the slide, which facilitates run up and down in a ground position.

According to another embodiment of the invention, said second parallel linkage system includes a pair of arms on either side of the platform, these pairs of arms having first ends, which are articulately connected to the slide, and second ends, which are articulately connected to a pivot joint, wherein said first parallel linkage system composes a pair of arms on either side of the platform, these pairs of arms having first ends, which are articulately connected to said pivot joint such that said first area is facing the slide, and second ends, which are articulately connected to the platform. In other words, thins embodiment differs more clearly from prior art according to EP 1 162 165, in that the pairs of arms being responsible for most of the vertical movement in this case instead are turned towards the vehicle and not away from it. In practice, this means that a lift according to this embodiment is able to closely follow the stairs inside of the vehicle even more easily.

Preferably, at this latter embodiment the pivot joints on either side of the platform are arranged to permit passage of the platform between themselves. The advantage of that is that the second parallel linkage system with that solution needs to work only from the horizontal and upwards.

### Brief Description of the Drawings

Two embodiments of the invention are described more closely in the following with reference to the schematic drawings enclosed, on which:
Figs. 1-4 show a cassette lift according to a first embodiment in four different operational modes; and
Figs. 5-8 in side views with broken away parts show a cassette lift according to a second embodiment in four different operational modes.

### Description of Two Embodiments

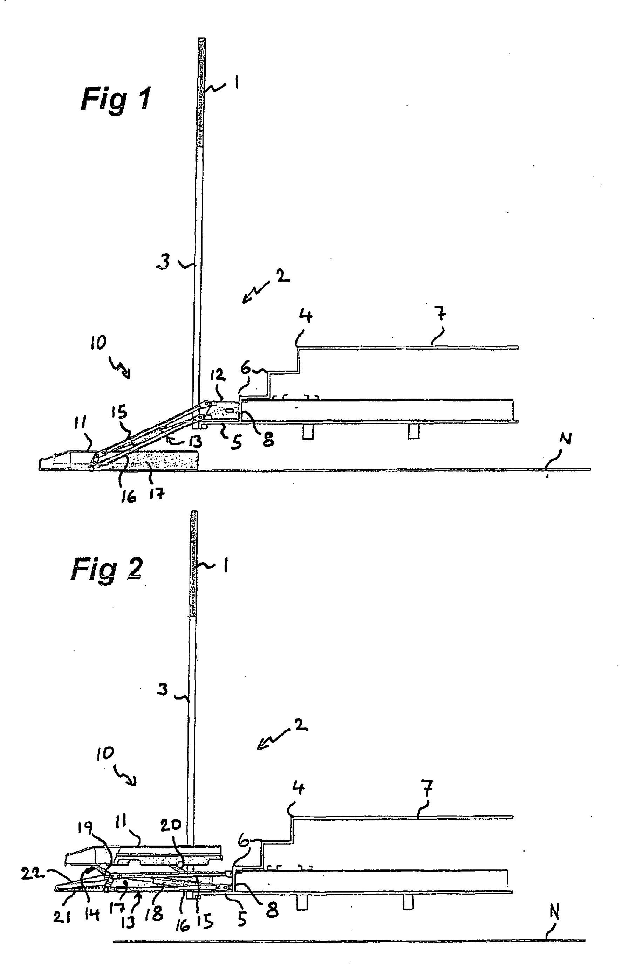

The cassette lift 10, that is shown in figs. 1-4, is intended for a bus 1, which on the drawings is indicated only by means of an entrance 2, through which passengers can get on board on and off board from the bus 1 and which inside of a doorway 3 of the bus 1 has a stair 4, leading from an entrance landing 5 in several steps 6 up to a vehicle floor 7. The cassette lift 10 comprises a horizontal platform 11, which in a resting position is entirely inserted in a riser 8 beneath the bottom step of the stair 4 in order to be in use advanced from there with the aid of a slide 12 (fig. 1). The displacement of the slide 12 is achieved with the aid of an electrical or hydraulic actuator (not shown). The slide 12 is connected to the platform 11 via a linkage system, which in the first embodiment comprises two alike units on either side of the platform 11 and thus of the slide 12. Therefore, for the sake of simplicity in the following only the linkage system visible on one side of the platform 11 is described.

According to the invention, the linkage system is divided into a first 13 and a second 14 parallel linkage system. The first parallel linkage system 13 comprises two parallel arms 15, 16 having first ends, which are articulately connected to the slide 12, and second ends. Which are articulately connected to a pivot joint 17 such that a closed parallelogram is formed. This parallelogram is in a well known way parallel displaceable for example with the aid of a cylinder unit 18, which works adjustable in length between two diagonal corners of the parallelogram, wherein the two arms 15, 16 are arranged to pivot within a first angular area. This angular area, which is facing away from the slide 11, is divided approximately in the middle by the horizontal and is sized such that the arms 15, 16 are able to lower the pivot joint 17 and thereby the platform 11 down to a ground level N on the outside of the bus 2.

The second parallel linkage system 14 comprises two parallel arms 19, 20, which have first ends, being articulately connected to the pivot joint 17, and second ends, being articulately connected to the platform 11, such that a closed parallelogram is formed. This parallelogram is also parallel displaceable for example with the aid of a cylinder unit (not shown), which works adjustable in length between two diagonal corners of the parallelogram, wherein the two arms 19, 20 are arranged to pivot within a second angular area. This second angular area expands within an area from approximately the horizontal and upwards past 90° and is facing away from the slide 12.

The pivot joint 17 is in the first embodiment of the invention integrated in a horizontal frame 21, which is arranged beneath the platform 11. The frame 21 has on its side facing away from the slide 12 a run up ramp 22, which in a ground position of the platform 11 facilitates run on and off.

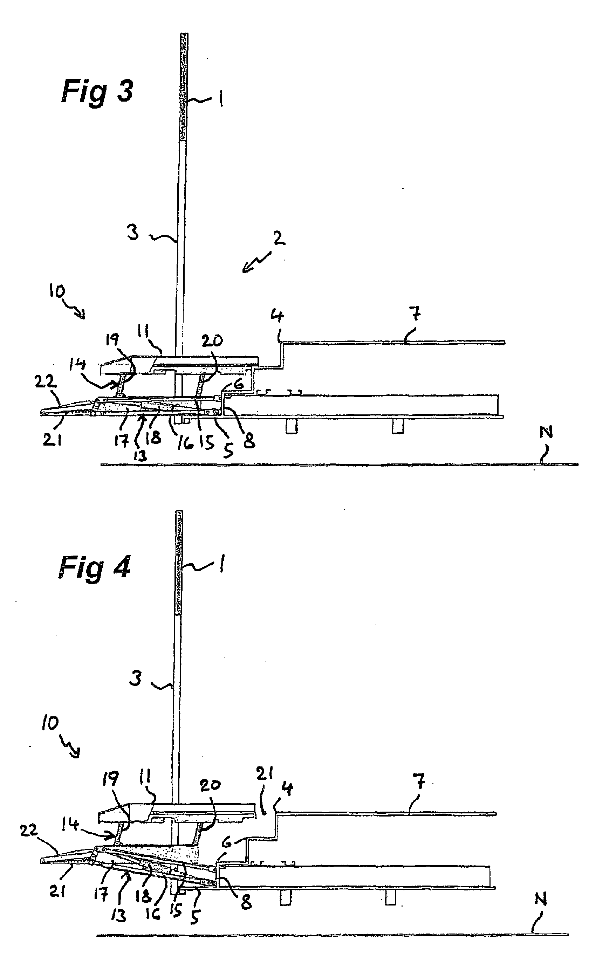

The function of the cassette lift 10 described above when lifting is shown in a picture sequence ranging from fig. 1 to fig. 4. When lowering the sequence of course it a reverse one. In fig. 1 the platform 11 is lowered to ground level N, where the slide 12 is maximally projected, the first parallel linkage system 13 is pivoted downwardly and the second parallel linkage system 14 is entirely lowered. In fig. 2 the first parallel linkage system 13 is horizontal, the slide 12 and thus the platform 11 are retracted almost to the riser of the first step and the platform 11 is with the aid of the second parallel linkage system 14 lifted to a level just above the tread of the first step. In fig. 3 the first parallel linkage system 13 and the slide 12 remain in unchanged positions and the platform 11 is by continued pivoting of the second parallel linkage system 14 lifted to the level of the tread of the second step as well as horizontally moved further into the bus 1. In fig. 4 the slide 12 remains in an unchanged position, the first parallel linkage system 13 is pivoted somewhat upwards from the horizontal and the platform 11 is by continued pivoting of the second parallel linkage system 14 on its way to close a remaining gap 22 between the platform 11 and the vehicle floor 7.

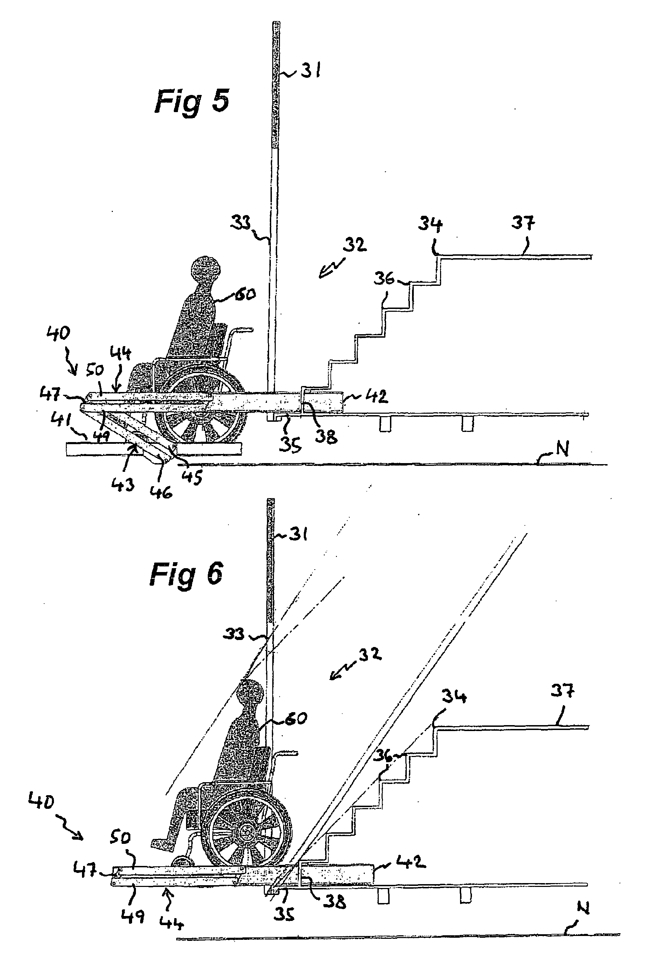

The cassette lift 40, that is shown in figs. 5-8, is also intended for a bus 31, which in the drawings is indicated only by means of an entrance 32, through which passengers can get on board on and off from the bus 31 and which inside of a doorway 33 of the bus 31 has a stair 34, leading from an entrance landing 35 in several steps 36 up to a vehicle floor 37, which in the bus 31 is placed considerably higher than in the bus 1 previously described. The cassette lift 40 comprises a horizontal platform 41, which in a resting position is entirely inserted in a riser 38 beneath the bottom step of the stair 34 in order to be in use advanced from there with the aid of a slide 42. The displacement of the slide 42 is achieved with the aid of an electrical or hydraulic actuator (not shown). The slide 42 is connected to the platform 41 via a linkage system, which in the second embodiment too comprises two alike units on either side of the platform 41 and thus of the slide 42. In the following, for the sake of simplicity only the linkage system visible on one side of the platform 41 is described.

According to the invention, the linkage system is divided into a first 43 and a second 44 parallel linkage system. The first parallel linkage system 43 comprises two parallel arms 45, 46, having first ends, which are articulately connected to a pivot joint 47, and second ends, which are articulately connected to the platform 41 such that a closed parallelogram is formed. This parallelogram is in a well known way parallel displaceable for example with the aid of a cylinder unit (not shown), which works adjustable in length between two diagonally opposite corners of the parallelogram, wherein both arms 45, 46 are arranged to pivot within a first angular area. This angular area, which is facing towards the slide 42, is divided approximately in the middle by the horizontal and is sized such that the arms 45, 46, when the pivot joint 47 is in level with the slide 42, are able to lower the platform 41 down to a ground level N on the outside of the bus 31.

The second parallel linkage system 44 comprises two parallel arms 49, 50 having first ends, which are articulately connected to the slide 42, and second ends, which are articulately connected to the pivot joint 47 such that a closed parallelogram is formed. This parallelogram is also parallel displaceable for example with the aid of a cylinder unit (not shown), which works adjustable in length between two diagonally opposite corners of the parallelogram, wherein both arms 49, 50 are arranged to pivot within a second angular area. This second angular area extends within an area from approximately the horizontal and upwards past 90° and is facing away from the slide 42.

The pivot joint 47 of second embodiment of the invention its entirely separated from the corresponding pivot joint 47 on the other side of the platform 41 such that the platform 41 can pass between the pivot joints 47.

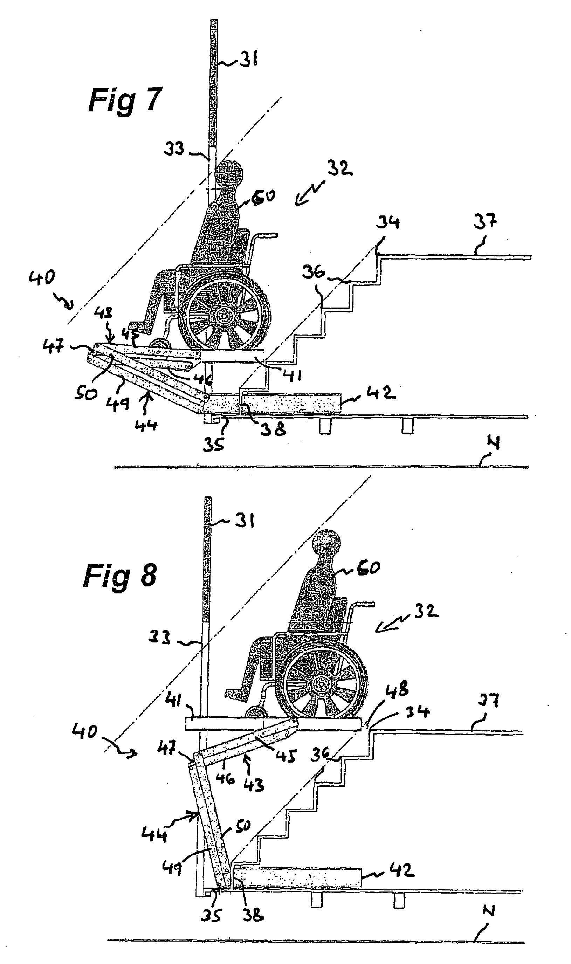

The function of the cassette lift 40 described above when lifting is shown in a picture sequence ranging from fig. 5 to fig. 8. When lowering the sequence of course is a reverse one. In fig. 5 the platform 41 is lowered to ground level N, where the slide 42 is maximally projected, the first parallel linkage system 43 is pivoted downward and the second parallel linkage system 44 is entirely lowered to a horizontal position. In fig. 6 is the second parallel linkage system 44 still is horizontal, the slide 42 and thus the platform 41 are retracted a bit towards the riser of the first step and the platform 41 is with the aid of the first parallel linkage system 14 lifted to a level just above the entrance landing 35. In fig. 7 the slide 42 and thus the platform 41 are retracted a bit further, the first parallel linkage system 43 remains unchanged in horizontal position and the platform 41 is by continued pivoting of the second parallel linkage system 44 lifted to the level of the tread of the second the step. In fig. 8 the slide 42 is inserted almost to the riser of the first step, the first parallel linkage system 43 is pivoted somewhat upwards from the horizontal and the platform 41 is by continued pivoting of the second parallel linkage system 44 on its way to close a remaining gap 48 between the platform 41 and the vehicle floor 37.

In particular the picture sequence of figs. 5-8 clearly shows by means of a passenger in a wheelchair 60 that the cassette lift 40 is very well able to, so to speak, sneak into the bus 31 and along the stairs 34 therein without any danger of collision with the top of the doorway 33. Of course the same goes for the lift 10 according to the first embodiment too, which in addition is useable too for vehicles with higher located floors, such as the bus 30, provided that the first parallel linkage system 13 is allowed to pivot upwards further than shown in figs. 1-4.

In this application, the expression linkage system is used for the description of interacting links, which are arranged to move a platform in a horizontal position. In cassette lifts linkage systems mostly comprise interacting links on both sides of the platform, since that promotes stability. However, this is not absolutely necessary, and thus the solution chosen therefore is up to the professional to decide in each individual case.

## Claims

1. Cassette lift (10; 40) for a vehicle (1; 31), such as a bus, a tram or a train, that has an entrance (2; 32), through which passengers can embark and alight the vehicle (1; 31) and which inside of a doorway (3; 33) of the vehicle (1; 31) has a stair (4; 34) leading up in several steps (6; 36) from an entrance landing (5; 35) to a vehicle floor (7; 37), wherein the cassette lift (10; 40) comprises a horizontal platform (11; 41), which in a resting position is inserted in one of the lower steps (6; 36) of the stair (4; 34) in order to be advanced from there for use with the aid of a slide (12; 42) and thereafter with the aid of a linkage system, which is articulately connected with both the slide (12; 42) and the platform (11; 41), to be moved vertically between a ground level (N) on the outside of the vehicle (1; 31) and a level in level with vehicle floor (7; 37), **characterised in that** the linkage system is divided into a first (13, 43) and a second (14; 44) parallel linkage system, which systems are articulately connected to each other, wherein the first parallel linkage system (13; 43) has arms (15, 16; 45, 46) which in order to enable substantially vertical movement of the platform (11; 41) are arranged to pivot within a first angular area including horizontal level, and wherein the second parallel linkage system (14; 44) has arms (19, 20; 49, 50) which for a mixed vertical and horizontal movement of the platform (11; 41) are arranged to pivot within a second angular area substantially from horizontal level and upwards, said second angular area facing away from the slide (12; 42).

2. Cassette lift (10; 40) according to claim 1, wherein the slide (12; 42) is arranged to contribute by horizontal displacement to said horizontal movement of the platform (11; 41) achieved with the aid of said second parallel linkage system (14; 44).

3. Cassette lift (10) according to claim 1 or 2, wherein said first parallel linkage system (13) includes a pair of arms (15, 16) on either side of the platform (11), these pairs of arms (15, 16) having first ends, which are articulately connected to the slide (12) such that said first angular area is facing away from the slide (12), and second ends, which are articulately connected to a pivot joint (17), wherein said second parallel linkage system (14) comprises a pair of arms (19, 20) on either side of the platform (11), these pairs of arms (19, 20) having first ends, which are articulately connected to the pivot joint (17), and second ends, which are articulately connected to the platform (11).

4. Cassette lift (10) according to claim 3, wherein the pivot joints (17) on either side of the platform (11) are integrated in a horizontal frame (21), which is arranged beneath the platform (11).

5. Cassette lift (10) according to claim 4, wherein said frame (21) comprises a run up ramp (22) on its side facing away from the slide (12).

6. Cassette lift (40) according to claim 1 or 2, wherein said second parallel linkage system (44) includes a pair of arms (49 50) on either side of the platform (41), these pairs of arms (49, 50) having first ends, which are articulately connected to the slide (42), and second ends, which are articulately connected to a pivot joint (47), wherein said first parallel linkage system (43) comprises a pair of arms (45, 46) on either side of the platform (41), these pairs of arms (45, 46) having first ends, which are articulately connected to said pivot joint (47) such that said first angular area is facing the slide (42), and second ends, which are articulately connected to the platform (41).

7. Cassette lift (40) according to claim 6, wherein the pivot joints (47) on either side of the platform (41) are arranged to permit passage of the platform (41) between themselves.

## Patentansprüche

1. Kassettenlift (10; 40) für ein Fahrzeug (1; 31) wie einen Bus, eine Straßenbahn oder einen Personenzug, das einen Eingang (2; 32) aufweist, durch welchen Passagiere das Fahrzeug (1; 31) betreten oder verlassen können, und das in einem Eingangsbereich (3; 33) des Fahrzeugs (1; 31) eine Treppe (4; 34) aufweist, die von einem Eingangspodest (5; 35) über mehrere Stufen (6; 36) zu einem Fahrzeugboden (7; 37) hinauf führt, wobei der Kassettenlift (10; 40) eine horizontale Plattform (11; 41) aufweist, die in einer Ruheposition in eine der unteren Stufen (6, 36) der Treppe (4; 34) eingeführt ist, um von dort mit Hilfe eines Schlittens (12; 42) zur Verwendung ausgefahren zu werden und danach mit Hilfe eines Hubsystems, das über Gelenke mit sowohl dem Schlitten (12; 42) als auch der Plattform (11; 41) verbunden ist, zwischen einem Bodenniveau (N) auf der Außenseite des Fahrzeugs (1; 31) und einem Niveau auf Höhe des Fahrzeugbodens (7; 37) vertikal bewegt zu werden, **dadurch gekennzeichnet, dass** das Hubsystem in ein erstes (13; 43) und ein zweites (14; 44), paralleles Hubsystem unterteilt ist, wobei die Systeme über Gelenke miteinander verbunden sind, wobei das erste parallele Hubsystem (13; 43) Arme (15, 16; 45, 46) aufweist, welche , so angeordnet sind, dass sie sich in einem ersten Winkelbereich einschließlich des horizontalen Niveaus drehen, um die im Wesentlichen vertikale Bewegung der Plattform (11; 41) zu ermöglichen, und wobei das zweite parallele Hubsystem (14; 44) Arme (19, 20; 49, 50) aufweist, die für eine gemischte vertikale und horizontale Bewegung der Plattform (11; 41) so angeordnet sind, dass sie sich in einem zweiten Winkelbereich im Wesentlichen vom horizontalen Niveau und aufwärts drehen, wobei der zweite Winkelbereich vom Schlitten (12; 42) abgewandt ist.

2. Kassettenlift (10; 40) nach Anspruch 1, wobei der Schlitten (12; 42) dafür angeordnet ist, durch horizontale Verlagerung an der horizontalen Bewegung der Plattform (11; 41) mitzuwirken, die mit Hilfe des zweiten parallelen Hubsystems (14; 44) erreicht wird.

3. Kassettenlift (10) nach Anspruch 1 oder 2, wobei das erste parallele Hubsystem (13) an jeder Seite der Plattform (11) ein Paar Arme (15, 16) aufweist, wobei diese Armpaare (15, 16) erste Enden aufweisen, die derart über Gelenke mit dem Schlitten (12) verbunden sind, dass der erste Winkelbereich vom Schlitten (12) abgewandt ist, und zweite Enden, die über Gelenke mit einer Drehverbindung (17) verbunden sind, wobei das zweite parallele Hubsystem (14) an jeder Seite der Plattform (11) ein Paar Arme (19, 20) umfasst, wobei diese Armpaare (19, 20) erste Enden aufweisen, die über Gelenke mit der Drehverbindung (17) verbunden sind, und zweite Enden, die über Gelenke mit der Plattform (11) verbunden sind.

4. Kassettenlift (10) nach Anspruch 3, wobei die Drehverbindungen (17) an jeder Seite der Plattform (11) in einen horizontalen Rahmen (21) eingebunden sind, der unter der Plattform (11) angeordnet ist.

5. Kassettenlift (10) nach Anspruch 4, wobei der Rahmen (21) an seiner vom Schlitten (12) abgewandten Seite eine Auffahrrampe (22) umfasst.

6. Kassettenlift (40) nach Anspruch 1 oder 2, wobei das zweite parallele Hubsystem (44) an jeder Seite der Plattform (41) ein Paar Arme (49, 50) aufweist, wobei diese Armpaare (49, 50) erste Enden aufweisen, die über Gelenke mit dem Schlitten (42) verbunden sind, und zweite Enden, die über Gelenke mit einer Drehverbindung (47) verbunden sind, wobei das erste parallele Hubsystem (43) an jeder Seite der Plattform (41) ein Paar Arme (45, 46) umfasst, wobei diese Armpaare (45, 46) erste Enden aufweisen, die über Gelenke derart mit der Drehverbindung (47) verbunden sind, dass der erste Winkelbereich dem Schlitten (42) zugewandt ist, und zweite Enden, die über Gelenke mit der Plattform (41) verbunden sind.

7. Kassettenlift (40) nach Anspruch 6, wobei die Drehverbindungen (47) an jeder Seite der Plattform (41) so angeordnet sind, dass sie den Durchgang der Plattform (41) zwischen ihnen ermöglichen.

## Revendications

1. Monte-cassette (10 ; 40) destiné à un véhicule (1 ; 31) comme un bus, un tram ou un train, qui possède une entrée (2 ; 32) à travers laquelle des passagers peuvent embarquer ou descendre du véhicule (1 ; 31) et qui à l'intérieur d'un encadrement de porte (3 ; 33) du véhicule (1 ; 31) comporte un escalier (4 ; 34) menant vers le haut en plusieurs marches (6 ; 36) à partir d'un palier d'entrée (5 ; 35) vers un plancher de véhicule (7 ; 37), dans lequel le monte-cassette (10 ; 40) comprend une plateforme horizontale (11 ; 41) qui dans une position de repos est insérée dans une des marches inférieures (6 ; 36) de l'escalier (4 ; 34) de manière à être avancée à partir de celle-ci à des fins d'utilisation à l'aide d'une glissière (12 ; 42) et ensuite à l'aide d'un système de tringlerie, qui est raccordé de manière articulée avec à la fois la glissière (12 ; 42) et la plateforme (11 ; 41), de manière à être déplacé verticalement entre un niveau de sol (N) à l'extérieur du véhicule (1 ; 31) et un niveau au niveau du plancher du véhicule (7 ; 37), **caractérisé en ce que** le système de tringlerie est divisé en un premier (13 ; 43) et un second (14 ; 44) système de tringlerie parallèle, lesquels systèmes sont raccordés l'un à l'autre de manière articulée, dans lequel le premier système de tringlerie parallèle (13 ; 43) comporte des bras (15, 16 ; 45 ; 46), qui de manière à permettre un mouvement substantiellement vertical de la plateforme (11 ; 41) sont disposés afin de pivoter à l'intérieur d'une première zone angulaire incluant un niveau horizontal, et dans lequel le second système de tringlerie parallèle (14 ; 44) comporte des bras (19, 20 ; 49, 50) qui à des fins de mouvement mixte vertical et horizontal de la plateforme (11 ; 41) sont agencés pour pivoter à l'intérieur d'une seconde zone angulaire substantiellement par rapport au niveau horizontal et vers le haut, ladite seconde zone angulaire se détournant de la glissière (12 ; 42).

2. Monte-cassette (10 ; 40) selon la revendication 1, dans lequel la glissière (12 ; 42) est disposée de manière à contribuer par déplacement horizontal audit mouvement horizontal de la plateforme (11 ; 41) effectué à l'aide dudit second système de tringlerie parallèle (14 ; 44).

3. Monte-cassette (10) selon la revendication 1 ou 2, dans lequel ledit premier système de tringlerie parallèle (13) inclut une paire de bras (15, 16) sur l'un et l'autre côté de la plateforme (11), ces paires de bras (15, 16) comportant des premières extrémités, qui sont raccordées de manière articulée à la glissière (12) de sorte que ladite première zone angulaire se détourne de la glissière (12), et des secondes extrémités, qui sont raccordées de manière articulée à un pivot (17), dans lequel ledit second système de tringlerie parallèle (14) comprend une paire de bras (19, 20) sur l'un et l'autre côté de la plateforme (11), ces paires de bras (19, 20) comportant des premières extrémités, qui sont raccordées de manière articulée au pivot (17) et des secondes extrémités, qui sont raccordées de manière articulée à la plateforme (11).

4. Monte-cassette (10) selon la revendication 3, dans lequel le pivot (17) sur l'un et l'autre côté de la plateforme (11) sont intégrés dans un châssis horizontal (21), qui est agencé en dessous de la plate-forme (11).

5. Monte-cassette (10) selon la revendication 4, dans lequel ledit châssis (21) comprend une rampe d'accès (22) sur son côté se détournant de la glissière (12).

6. Monte-cassette (40) selon la revendication 1 ou 2, dans lequel ledit second système de tringlerie parallèle (44) inclut une paire de bras (49, 50) sur l'un et l'autre côté de la plateforme (41), ces paires de bras (49, 50) ayant des premières extrémités, qui sont raccordées de manière articulée à la glissière (42), et des secondes extrémités, qui sont raccordées de manière articulée à un pivot (47), dans lequel ledit premier système de tringlerie parallèle (43) comprend une paire de bras (45, 46) sur l'un et l'autre côté de la plateforme (41), ces paires de bras (45, 46) ayant des premières extrémités, qui sont raccordées de manière articulée audit pivot (47) de sorte que ladite première zone angulaire soit en face de la glissière (42), et des secondes extrémités, qui sont raccordées de manière articulée à la plateforme (41).

7. Monte-cassette (40) selon la revendication 6, dans lequel le pivot (47) sur l'un et l'autre côté de la plateforme (41) sont agencés pour permettre le passage de la plate-forme (41) entre eux.
